# EUROPEAN PATENT SPECIFICATION

(11) **EP 0 914 639 B1**
(45) Date of publication and mention of the grant of the patent: **06.09.2000**
(21) Application number: 97929399.0
(22) Date of filing: 01.07.1997
(51) Int. Cl.: G06K 7/12, G06K 19/06, G06K 19/14, C08J 5/18, G02B 5/30

(54) **SECURITY MARKING SYSTEM**
SICHERHEITSMARKIERUNGSSYSTEM
SYSTEME DE MARQUAGE DE SECURITE

(30) Priority: 06.07.1996 GB 9614261
(43) Date of publication of application: 12.05.1999
(73) Proprietor: The Secretary of State for Defence in Her Britannic Majesty's Government of The United Kingdom of Great Britain and Northern I, London SW1A 2HB (GB)
(72) Inventor: SAGE, Ian, Charles, Malvern Worcs. WR14 3PS (GB)
(74) Representative: Skelton, Stephen Richard
(86) International application number: GB9701763
(87) International publication number: WO9801817

(56) References cited:
- EP-A- 0 297 927
- GB-A- 2 189 800
- US-A- 3 276 316
- US-A- 5 423 432
- US-A- 5 502 304
- US-A- 5 532 104
- PATENT ABSTRACTS OF JAPAN vol. 5, no. 69 (P-060), 9 May 1981 & JP 56 019009 A (SANRITSU DENKI KK), 23 February 1981,
- PATENT ABSTRACTS OF JAPAN vol. 10, no. 124 (P-454), 9 May 1986 & JP 60 250304 A (NITTO DENKI KOGYO KK), 11 December 1985,
- PATENT ABSTRACTS OF JAPAN vol. 9, no. 54 (P-340), 8 March 1985 & JP 59 192938 A (SEIKO DENSHI KOGYO KK), 1 November 1984,

## Description

This invention relates to a security system for identifying genuine and counterfeit articles using a covert security mark. The mark is covert and the system may therefore be operated covertly. It has particular (although not exclusive) relevance to the retail trade.

Counterfeiting of articles is a long standing international problem in, for example, the retail trade and credit card industry and the need for an effective means of combating counterfeiting has attracted considerable attention. One technique for indicating the authenticity of a particular article is by the use of a trademark. Such trademarks are becoming increasingly complex in design incorporating, for example, optical effects such as holograms and diffraction patterns. However, large scale counterfeiting organisations have access to considerable resources and are becoming increasingly successful at copying even the most complex marks.

Other more sophisticated anticounterfeiting measures involve the use of phosphorescent or fluorescent materials which are invisible under normal lighting but are activated when illuminated by ultra violet radiation. Properties of the fluorescent or phosphorescent radiation, for example the intensity, wavelength or the fluorescence or phosphorescence lifetime, may then be used to provide the authenticating signature. While such measures are well known as a covert means of security marking, it is possible to replicate a printed fluorophor or phosphor mark, especially considering the increasing expertise and resources of large scale anticounterfeiting organisations.

Relevant prior art is also described in US 3 276 316, which describes a method of making a polymer sheet with an incorporated dichroic fluorescent dye which is capable of providing polarised ultraviolet fluourescent light, and in Patent Abstracts of Japan, vol. 10, no. 124 (P-454), 9 May 1986 and JP 60250304 (11 December 1985) which describes a polarising body comprising a layer, a fluorescent adhesive and a polarising layer.

EP-A-0 297 927 discloses a method of producing a polarising film which has a dichroic dye. The method comprises dissolving polyvinyl alcohol in a solvent. A polarising agent such as dichroic dye is dissolved therein, and a film of the solution is produced and dried. The unstretched film thus obtained is then heated to about 100-250 °c and stretched. The film is then cooled.

US 5 532 104 describes a system for reading information from a recording medium (e.g. a cover of a book) and overcomes the problem of improving the contrast of an imaged bar code. The system comprises an apparatus having a source for irradiating the recording medium with ultraviolet radiation, a polariser and a reader. The polariser is used to remove polarised fluorescent radiation from the signal received by the reader. This increases the contrast of the bar code.

The present invention relates to a system and a method for covertly marking an article and checking its authenticity, and a method for producing a mark for covertly marking an article. As well as having characteristic fluorescent or phosphorescent properties, the mark also has an additional polarisation property which acts as further means of authentication and makes the mark more difficult to replicate. The mark is intrinsically cheap to manufacture and easy to detect and verify.

According to an aspect of the invention, a system for covertly marking an article and checking its authenticity comprises;
a mark comprising
   a fluorescent or phosphorescent material having an absorption band,
   the mark having a unidirectionally aligned structure such that upon illumination with radiation corresponding to the absorption band in the material the mark emits polarised fluorescent or phosphorescent radiation of characteristic wavelength, the mark being applied to the article,
a source of electromagnetic radiation for illuminating the article, wherein the wavelength of said radiation corresponds to the absorption band in the material, such that upon illumination the mark emits polarised fluorescent or phosphorescent radiation of characteristic wavelength and
means for detecting the polarised fluorescent or phosphorescent radiation emitted from the mark,
whereby the detection of the polarised fluorescent or phosphorescent radiation of characteristic wavelength provides an indication of the authenticity of the article.

The source of electromagnetic radiation may be an ultra violet lamp emitting radiation between 200 nm and 400 nm. Alternatively, the source of electromagnetic radiation may be a lamp emitting short wavelength visible light between 380 nm and 550 nm.

The means for detecting the polarised fluorescent or phosphorescent radiation may include a sample of linearly polarising material having a polarisation axis substantially perpendicular to the direction of fluorescent or phosphorescent radiation.

The polarisation of fluorescent or phosphorescent radiation may be varied such that the detection of the variation in polarisation provides an indication of the authenticity of the mark.

The orientation of the sample of linearly polarising material may be varied such that the polarised fluorescent or phosphorescent radiation is detected at two or more orientations of the sample.

The system may also include;
a liquid crystal cell for transmitting the polarised fluorescent or phosphorescent radiation, wherein said liquid crystal cell is capable of rotating the plane of polarisation of the fluorescent or phosphorescent radiation transmitted through the cell and
means for applying a variable voltage across the liquid crystal cell
such that on application of the variable voltage across the cell the polarisation of fluorescent or phosphorescent radiation passing through the cell is varied.

The liquid crystal cell may comprise a twisted nematic material.

The system may also comprise;
a first retardation plate for converting the linearly polarised fluorescent or phosphorescent radiation into circularly or eliptically polarised radiation,
a second retardation plate for converting said circularly or eliptically polarised radiation into linearly polarised radiation wherein the second retardation plate is mounted in front of the means for determining the state of polarisation,
such that eliptically or circularly polarised fluorescent or phosphorescent radiation is transmitted between the first and second retardation plates.

The polarisation of fluorescent or phosphorescent radiation may be related to the intensity of radiation transmitted by the linearly polarising material. The radiation may be observed directly by the human eye or may be detected by a suitable detector. A narrow band filter may be mounted in front of the eye or the detector in order to enhance the observation or detection of the fluorescent or phosphorescent radiation of characteristic wavelength.

The mark may comprise two or more sections wherein different sections of the mark are unidirectionally aligned along different directions. Different sections of the mark may also comprise different fluorescent or phosphorescent materials.

According to another aspect of the invention, a method for producing a mark for covertly marking an article comprises the steps of;
(i) dispersing a sample of polymer in solvent at room temperature to form a viscous solution,
(ii) dispersing a fluorescent or phosphorescent material in said viscous solution to form a fluorescent or phosphorescent solution,
(iii) spreading a substantially uniform layer of fluorescent or phosphorescent solution on a substrate and drying the solution.
(iv) removing the dried layer from the substrate and heating the layer to a temperature above the glass transition point of the polymer,
(v) unidirectionally stretching the heated layer so as to produce a film having a unidirectionally aligned structure,
(vi) cooling the film to substantially room temperature and
(vii) producing marks to be applied to the genuine article from the film.

The film may be laminated to a retardation plate prior to producing marks to be applied to the genuine article. The marks may be produced from the film using a foil stamping process.

The polymer may be poly vinyl alcohol (PVA), cellulose acetate, polyethylene terephthalate (PET), polycarbonate or poly vinyl chloride (PVC). In the case of poly vinyl alcohol, the dried layer is heated to substantially 100°C.

According to another aspect of the invention, a method for covertly marking an article and checking its authenticity comprises the steps of;
(i) applying a mark to the article, wherein said mark comprises a fluorescent or phosphorescent material having an absorption band and has a unidirectionally aligned structure,
(ii) illuminating the article with a source of electromagnetic radiation, wherein the wavelength of said radiation corresponds to the absorption band in the fluorescent or phosphorescent material, such that upon illumination polarised fluorescent or phosphorescent radiation of characteristic wavelength is emitted from the mark,
(iii) detecting the polarised fluorescent or phosphorescent radiation of characteristic wavelength,
whereby the detection of polarised fluorescent or phosphorescent radiation of characteristic wavelength provides an indication of the authenticity of the article.

The invention will now be described, by example only, with reference to the following figures in which;
Figure 1 shows a diagram of a security system which may be used for product identification or verification purposes and employs linearly polarised radiation
Figure 2 shows a diagram of an alternative arrangement of the system for which circularly or eliptically polarised radiation is employed,
Figure 3 shows an alternative configuration of the system, incorporating a liquid crystal cell and
Figure 4 shows a diagram of the security system, for operation in transmission mode.

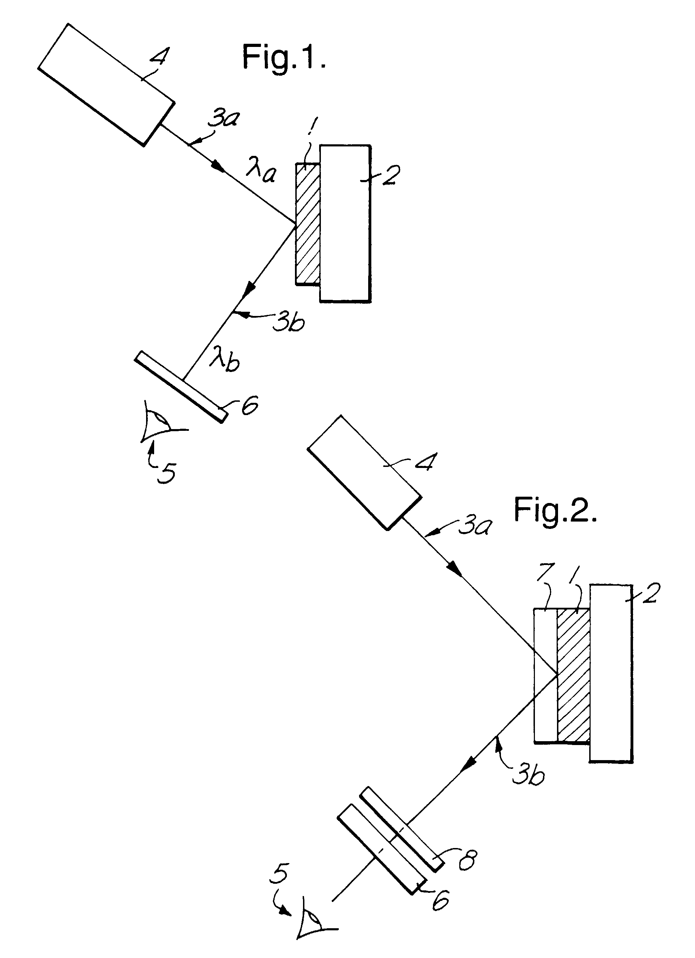

Referring to Figure 1, a security mark 1 is applied to an article 2 which is to be authenticated. The mark comprises a fluorescent or phosphorescent material and is such that under normal lighting conditions it appears invisible to an observer. The mark 1 is illuminated with radiation 3a (wavelength = λₐ) from a radiation source 4. The radiation source 4 may be a source of ultra violet radiation emitting radiation in the wavelength region between approximately 200 nm and 400 nm and preferably between 250 nm and 380 nm. Alternatively, the source may be a lamp emitting short wavelength visible radiation in the region between 380 nm and 550 nm. For a mark comprising a fluorescent or phosphorescent material, upon illumination with the radiation 3a, fluorescent or phosphorescent radiation 3b of characteristic wavelength (λ_{b}) is emitted from the mark 1. The radiation may be observed directly by a human eye 5, as shown in the diagram, or may be detected by a suitable detector.

A narrow band filter (not shown) may be mounted in front of the detector or the eye in order to enhance the detection or observation of radiation of characteristic wavelength.

The aligned structure of the mark is such that characteristic fluorescent or phosphorescent radiation emitted from the mark is linearly polarised and the polarisation properties of the radiation are then used to provide a means for verifying the authenticity of the mark. The observation of the fluorescent or phosphorescent radiation without the required polarisation effects is not sufficient to authenticate the article.

The system may be operated with either linearly polarised radiation eliptically polarised radiation or circularly polarised radiation, the latter of which lends itself to more covert operation. Referring to Figure 1, in the case of linearly polarised radiation, an element of linearly polarising material 6 (for example, a sheet of polariser) is placed in the path of reflected radiation 3b prior to detection. The aligned structure of the mark 1 is such that there is a strong dependence of the apparent fluorescence brightness on the orientation of the polariser.

The polarisation transmission axis of the polariser may remain fixed so that only incident radiation of a particular polarisation is transmitted by the polariser. The intensity of radiation observed may then be compared with that expected for the arrangement as a means of checking the authenticity of the mark. In this case, suitable detection means, such as a photodetector sensitive to the radiation emitted by the fluorescent or phosphorescent material, would be required to measure the intensity of radiation transmitted by the polariser.

In a preferred arrangement, the polarisation transmission axis of the polariser may be switched so that fluorescent or phosphorescent radiation of a particular polarisation is alternately transmitted and blocked by the polariser, therefore giving rise to a characteristic flashing effect. For example, rotating a polariser 6 about an axis substantially parallel to the direction of emitted radiation gives a flashing appearance to the mark 1 which may easily be recognised by the human eye. To give the desired flashing effect the polariser may be continuously rotated about this axis or may alternate between substantially orthogonal orientations. The observation of both the flashing effect in combination with the characteristic fluorescent or phosphorescent radiation provides a verification of the authenticity of the article. The characteristic effect may be an intensity variation or may be apparent as a colour variation.

Referring to Figure 2, the mark 1 may be laminated to a retardation plate 7, for example a quarter-wave plate, and this combination is then applied to the article 2 to be authenticated. If the retardation plate is a quarter-wave plate, on passing through the plate 7 plane polarised radiation transmitted from the mark becomes circularly polarised. A second retardation plate 8 is mounted in front of the human eye, or the detection means, to convert the circularly polarised radiation back to plane polarised radiation, prior to observation or detection.

Left-handed and right-handed circularly polarised radiation passing through the quarter-wave plate 8 is converted into linearly polarised radiation where the plane of polarisation of radiation output from the quarter-wave plate depends on the handedness of the radiation 3b input to the quarter-wave plate 8. By rotating the polarisation axis of the polariser 6, the amount of linearly polarised radiation transmitted by the polariser varies and gives rise to a characteristic flashing effect as described previously. Alternatively, the orientation of the retardation plate may be varied to give the same effect.

Eliptically polarised radiation may also be transmitted between the first retardation plate 7 and the second retardation plate 8 by use of suitable retardation plates.

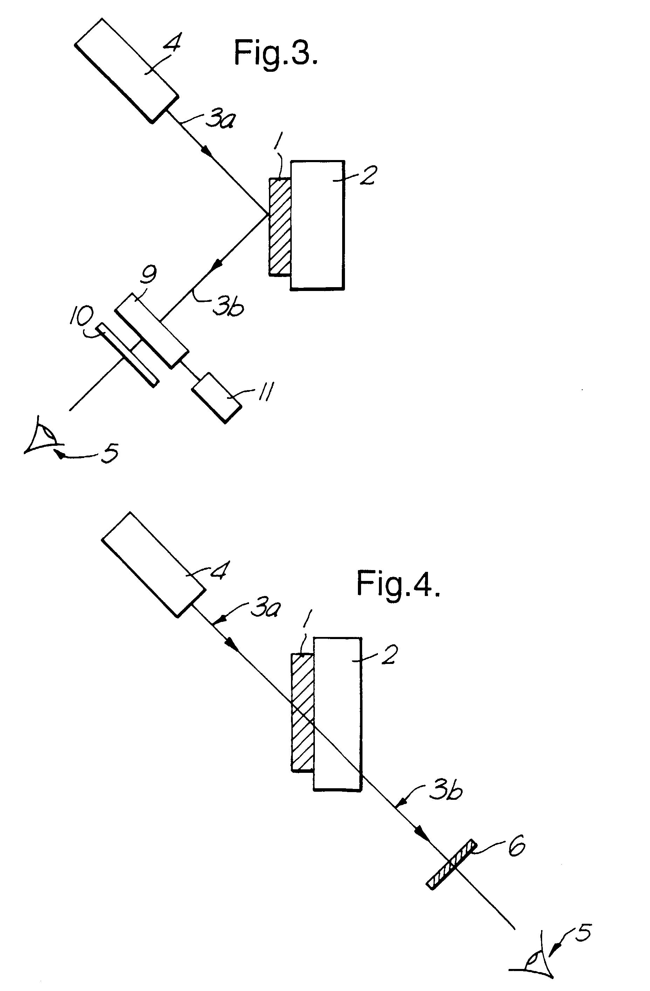

Referring to Figure 3, a twisted nematic liquid crystal cell 9 and a fixed sheet of linearly polarising material 10 may be used instead of a rotating polariser in order to produce the desired flashing effect. Figure 3 shows the case where plane polarised radiation is employed but the cell 9 may also be used, in conjunction with the polariser 10, for eliptically and circularly polarised radiation.

Typically, the cell 9 comprises a conventional twisted nematic liquid crystal material contained within facing glass substrates. The inner surfaces of the glass substrates are typically coated with a transparent conducting layer (not shown), for example indium tin oxide.

Prior to assembly, the glass substrates are rubbed in a particular direction and the liquid crystal aligned along the rubbing direction near the surface of the glass. The upper substrate is aligned such that its rubbing direction is perpendicular to the rubbing direction of the lower glass substrate. Therefore, with no volts applied to the liquid crystal cell there is a continuous twist in the liquid crystal director, between the top and bottom substrates. For a twist of 90 degrees, as incident radiation passes through the liquid crystal cell its plane of polarisation is therefore rotated by 90 degrees by the twisted structure of the director.

A suitable material for use in the liquid crystal cell would be E7 nematic material plus a suitable dopant to define the pitch direction and length (e.g. 1% C15 or 0.05% CB15), available from the E. Merck catalogue. A typical thickness of the liquid crystal material would be between 6-15 µm.

The application of a switchable voltage across the cell electrodes causes the central portion of the liquid crystal to align with the field. The twisted structure no longer exists and the plane of polarisation of incoming light is not rotated as it passes through the cell. On removing the voltage, the liquid crystal material relaxes back to its twisted state. The cell is therefore switched between an OFF (twisted) and ON (not twisted) state by the application and removal of a suitable voltage.

The voltage applied across the face of the cell may be varied by means of a variable voltage source 9. By switching the voltage source 11 between "ON" and "OFF" states, only polarisation of a particular orientation will be transmitted by the polariser 10 and a flashing effect will be seen.

The mark 1 to be applied to the product 2 may be made according to the following technique. A 10 gram sample of poly vinyl alcohol, molecular weight 115,000 (commercially available from E. Merck Ltd.), is dispersed into 100 grams of water at room temperature and stirred over, typically, a 12 hour period to provide a clear, viscous solution. Typically 0.5 grams of Fluorescent Brightener 28 (commercially available from Aldrich Chemical Company, Gillingham, UK) are then added to the poly vinyl alcohol (PVA) solution. The solution is stirred again to dissolve the solid, and then allowed to stand to allow air bubbles to escape.

Many other polymers could be dispersed in solvent to form the solution to which the fluorescent or phosphorescent material is added. For example, the polymer may be cellulose acetate, polyethylene terephthalate (PET), polycarbonate or poly vinyl chloride (PVC).

A portion of the solution may then be spread into a uniform layer approximately 1 mm thick on a plain glass sheet and allowed to air dry. Alternatively the solution may be spread onto a paper layer having a release coating. The resulting dyed PVA layer is then peeled from the glass and a clamp attached at each end. The layer is heated in a hot air stream to a temperature above the glass transition temperature of the polymer. This is typically greater than 40 °C and for PVA is approximately 100 °C. The layer is then unidirectionally stretched and, in the case of PVA, an extension ratio of typically 7:1 may be achieved.

Tension is maintained as the sample is cooled back to room temperature. Patterns may then be stamped from the resulting film, using a conventional foil stamping technique, and backed with a toluene-based adhesive. If circularly or eliptically polarised radiation is to be employed in the system, the film may be laminated to a retardation plate, such as a quarter-wave plate, prior to foil stamping.

Examination of the sample described above under an ultraviolet inspection lamp emitting at 365 nm causes the mark to exhibit a strong blue visible fluorescence which can not easily be distinguished from a standard printed fluorescent or phosphorescent ink mark. However, upon examination under the same lamp with a polarising filter 6 between the eye and the pattern under test, a strong dependence of the apparent fluorescence brightness on the orientation of the polariser is observed, as described previously.

The mark may be made such that it comprises two or more sections wherein different sections are aligned along different directions, such that radiation emitted from each section is polarised in a different direction. For example, a particular section of a trademark may have a different polarisation axis to the rest of the mark, providing an additional level of security. Furthermore, different fluorescent or phosphorescent materials may be used on different sections of a mark or the mark may be used in conjunction with other fluorescent or phosphorescent marks, such as existing marks without polarisation properties.

The mark may be embossed onto a variety of substrates including paper, labels, card, leather, plastic and sheet metal. The security mark may be applied as an anticounterfeiting measure or as a product tracking measure.

Referring to Figure 4, if the product 2 to be authenticated 1 is substantially transparent to the wavelength of incoming radiation 3a (for example, a glass bottle or container) the system may be operated in transmission mode with the observer (or detector) 5 viewing radiation transmitted by the mark 1 and the product 2.

## Claims

1. A system for covertly marking an article (2) and checking its authenticity comprising;
a mark (1) comprising a fluorescent or phosphorescent material having an absorption band, the mark having a unidirectionally aligned structure such that upon illumination with radiation (3a) corresponding to the absorption band in the material the mark emits polarised fluorescent or phosphorescent radiation (3b) of characteristic wavelength, the mark (1) being applied to the article (2),
a source (4) of electromagnetic radiation (3a) for illuminating the article (2), wherein the wavelength of said radiation (3a) corresponds to the absorption band in the material, such that upon illumination the mark emits polarised fluorescent or phosphorescent radiation (3b) of characteristic wavelength and
means (5) for detecting the polarised fluorescent or phosphorescent radiation (3b) emitted from the mark,
whereby the detection of the polarised fluorescent or phosphorescent radiation (3b) of characteristic wavelength provides an indication of the authenticity of the article (2).

2. The system of claim 1 wherein the source (4) of electromagnetic radiation is an ultra violet lamp emitting radiation between 200 nm and 400 nm.

3. The system of claim 1 wherein the source (4) of electromagnetic radiation is a lamp emitting short wavelength visible light between 380 nm and 550 nm.

4. The system of claim 1 wherein the means for detecting the polarised fluorescent or phosphorescent radiation includes a sample of linearly polarising material (6; 10).

5. The system of claim 4 wherein the sample of linearly polarising material has a polarisation axis substantially perpendicular to the direction of fluorescent or phosphorescent radiation (3b).

6. The system of any of claims 1-4 wherein the polarisation of fluorescent or phosphorescent radiation (3b) is varied and the detection of the variation in polarisation provides an indication of the authenticity of the mark.

7. The system of claim 4 wherein the orientation of the sample of linearly polarising material (6) is varied such that the polarised fluorescent or phosphorescent radiation is detected at two or more orientations of the sample (6).

8. The system of claim 6, and also including;
a liquid crystal cell (9) for transmitting the polarised fluorescent or phosphorescent radiation (3b), wherein the liquid crystal cell (9) is capable of rotating the plane of polarisation of the fluorescent or phosphorescent radiation (3b) transmitted through the cell (9) and
means (11) for applying a variable voltage across the liquid crystal cell (9),
such that on application of the variable voltage across the cell (9) the polarisation of fluorescent or phosphorescent radiation (3b) passing through the cell (9) is varied.

9. The system of claim 8 wherein the liquid crystal cell (9) comprises a twisted nematic material.

10. The system of claim 1, and also comprising;
a first retardation plate (7) for converting linearly polarised fluorescent or phosphorescent radiation (3a) into circularly or eliptically polarised radiation,
a second retardation plate (8) for converting said circularly or eliptically polarised radiation into linearly polarised radiation wherein the second retardation plate (8) is mounted in front of the means (5) for detecting the fluorescent or phosphorescent radiation (3b),
such that eliptically or circularly polarised fluorescent of phosphorescent radiation is transmitted between the first (7) and second (8) retardation plates.

11. The system of claim 10 wherein the mark (1) is laminated onto the first retardation plate (7).

12. The system of any of claims 1-4 wherein the polarisation of fluorescent or phosphorescent radiation is related to the intensity of radiation transmitted by the linearly polarising material (6; 10).

13. The system of claim 12 wherein the polarised fluorescent or phosphorescent radiation (3b) is observable by the human eye.

14. The system of claim 12, and also including a detector for detecting the polarised fluorescent or phosphorescent radiation (3b).

15. The system of claim 1 wherein the mark (1) comprises two or more sections wherein different sections of the mark are unidirectionally aligned along different directions.

16. The system of claim 1 wherein the mark comprises two or more sections wherein different sections of the mark comprise different fluorescent or phosphorescent materials.

17. The system of claim 1, and also comprising a narrow band filter for enhancing the observation or detection of fluorescent or phosphorescent radiation (3b) of characteristic wavelength emitted from the mark.

18. A method for producing a mark (1) for covertly marking an article (2) comprising the steps of;
(i) dispersing a sample of polymer in solvent at room temperature to form a viscous solution,
(ii) dispersing a fluorescent or phosphorescent material in said viscous solution to form a fluorescent or phosphorescent solution,
(iii) spreading a substantially uniform layer of fluorescent or phosphorescent solution on a substrate and drying the solution,
(iv) removing the dried layer from the substrate and heating the layer to a temperature above the glass transition point of the polymer,
(v) unidirectionally stretching the heated layer so as to produce a film having a unidirectionally aligned structure,
(vi) cooling the film to substantially room temperature and
(vii) producing marks to be applied to the genuine article from the film.

19. The method of claim 18, and also comprising the step of laminating the film to a retardation plate prior to producing marks to be applied to the genuine article.

20. The method of claims 18 or 19 wherein the marks are produced from the film using a foil stamping process.

21. The method of claim 20 wherein the polymer is poly vinyl alcohol.

22. A method for covertly marking an article (2) and checking its authenticity comprising the steps of;
(i) applying a mark (1) to the article (2), wherein said mark (1) comprises a fluorescent or phosphorescent material having an absorption band and has a unidirectionally aligned structure,
(ii) illuminating the article (2) with a source (4) of electromagnetic radiation (3a), wherein the wavelength of said radiation (3a) corresponds to the absorption band in the fluorescent or phosphorescent material, such that upon illumination polarised fluorescent or phosphorescent radiation of characteristic wavelength is emitted from the mark (1),
(iii) detecting the polarised fluorescent or phosphorescent radiation (3b) of characteristic wavelength,
whereby the detection of polarised fluorescent or phosphorescent radiation (3b) of characteristic wavelength provides an indication of the authenticity of the article (2).

## Patentansprüche

1. System zur verborgenen Markierung eines Gegenstands (2) und zur Überprüfung seiner Echtheit, das umfaßt:
- eine Markierung (1), die enthält: ein Fluoreszenz- oder Phosphoreszenzmaterial, das eine Absorptionsbande aufweist, wobei die Markierung eine unidirektional ausgerichtete Struktur in der Weise aufweist, daß nach Beleuchtung mit einer Strahlung (3a), die der Absorptionsbande im Material entspricht, die Markierung eine polarisierte Fluoreszenz- oder Phosphoreszenzstrahlung (3b) einer charakteristischen Wellenlänge emittiert, wobei die Markierung auf dem Gegenstand (2) aufgebracht ist,
- eine Quelle (4) für eine elektromagnetische Strahlung (3a) zur Beleuchtung des Gegenstands (2), wobei die Wellenlänge der Strahlung (3a) der Absorptionsbande im Material in der Weise entspricht, daß die Markierung bei Beleuchtung eine polarisierte Fluoreszenz- oder Phosphoreszenzstrahlung (3b) einer charakteristischen Wellenlänge emittiert, und
- eine Einrichtung (5) zur Erfassung der polarisierten Fluoreszenz- oder Phosphoreszenzstrahlung (3b), die von der Markierung emittiert wird,
wobei die Erfassung der polarisierten Fluoreszenz- oder Phosphoreszenzstrahlung (3b) einer charakteristischen Wellenlänge ein Anzeichen für die Echtheit des Gegenstands (2) ist.

2. System nach Anspruch 1, bei dem die Quelle (4) für elektromagnetische Strahlung eine UV-Lampe ist, die Strahlung im Bereich von 200 bis 400 nm emittiert.

3. System nach Anspruch 1, bei dem die Quelle (4) für elektromagnetische Strahlung eine Lampe ist, die sichtbares Licht einer kurzen Wellenlänge im Bereich von 380 bis 550 nm emittiert.

4. System nach Anspruch 1, bei dem die Einrichtung zur Erfassung der polarisierten Fluoreszenz- oder Phosphoreszenzstrahlung eine Probe eines linear polarisierenden Materials (6, 10) enthält.

5. System nach Anspruch 4, bei dem die Probe des linear polarisierenden Materials eine Polarisationsachse aufweist, die im wesentlichen senkrecht zur Richtung der Fluoreszenz- oder Phosphoreszenzstrahlung (3b) ist.

6. System nach einem der Ansprüche 1 bis 4, bei dem die Polarisation der Fluoreszenz- oder Phosphoreszenzstrahlung (3b) verändert ist und die Erfassung der Änderung der Polarisation ein Anzeichen für die Echtheit der Markierung ist.

7. System nach Anspruch 4, bei dem die Orientierung der Probe des linear polarisierenden Materials (6) so verändert ist, daß die polarisierte Fluoreszenz- oder Phosphoreszenzstrahlung an zwei oder mehreren Orientierungen der Probe (6) erfaßt wird.

8. System nach Anspruch 6, das ferner umfaßt:
eine Flüssigkristallzelle (9), durch welche die polarisierte Fluoreszenz- oder Phosphoreszenzstrahlung (3b) hindurchgeht, wobei die Flüssigkristallzelle (9) zur Drehung der Polarisationsebene der Fluoreszenz- oder Phosphoreszenzstrahlung (3b) befähigt ist, die durch die Flüssigkristallzelle (9) durchgelassen wird, und
eine Einrichtung (11) zum Anlegen einer veränderlichen Spannung an die Flüssigkristallzelle (9) in der Weise, daß bei Anlegen der veränderlichen Spannung an die Flüssigkristallzelle (9) die Polarisation der Fluoreszenz- oder Phosphoreszenzstrahlung (3b), die durch die Flüssigkristallzelle (9) hindurchgeht, verändert wird.

9. System nach Anspruch 8, bei dem die Flüssigkristallzelle (9) ein verdrilltes nematisches Material enthält.

10. System nach Anspruch 1, das ferner umfaßt:
eine erste Verzögerungsplatte (7) zur Umwandlung der polarisierten Fluoreszenz- oder Phosphoreszenzstrahlung in zirkular oder elliptisch polarisierte Strahlung,
eine zweite Verzögerungsplatte (8) zur Umwandlung der zirkular oder elliptisch polarisierten Strahlung in linear polarisierte Strahlung, wobei die zweite Verzögerungsplatte (8) vor der Einrichtung (5) zur Erfassung der Fluoreszenz- oder Phosphoreszenzstrahlung (3b) so angeordnet ist, daß die elliptisch oder zirkular polarisierte Fluoreszenz- oder Phosphoreszenzstrahlung zwischen der ersten und der zweiten Verzögerungsplatte (8) durchgelassen wird.

11. System nach Anspruch 10, bei dem die Markierung (1) auf die erste Verzögerungsplatte (7) auflaminiert ist.

12. System nach einem der Ansprüche 1 bis 4, bei dem die Polarisation der Fluoreszenz- oder Phosphoreszenzstrahlung in einer Beziehung zur Intensität der Strahlung steht, die durch das linear polarisierende Material (6, 10) durchgelassen wird.

13. System nach Anspruch 12, bei dem die polarisierte Fluoreszenz- oder Phosphoreszenzstrahlung (3b) durch das menschliche Auge beobachtbar ist.

14. System nach Anspruch 12, das ferner einen Detektor zur Erfassung der polarisierten Fluoreszenz- oder Phosphoreszenzstrahlung (3b) enthält.

15. System nach Anspruch 1, wobei die Markierung (1) zwei oder mehr Abschnitte aufweist und die verschiedenen Abschnitte der Markierung längs unterschiedlicher Richtungen unidirektional ausgerichtet sind.

16. System nach Anspruch 1, wobei die Markierung zwei oder mehr Abschnitte aufweist und die verschiedenen Abschnitte der Markierung unterschiedliche Fluoreszenz- oder Phosphoreszenzmaterialien enthalten.

17. System nach Anspruch 1, das ferner ein Schmalbandfilter für eine verbesserte Beobachtung oder Erfassung der von der Markierung emittierten Fluoreszenz- oder Phosphoreszenzstrahlung (3b) einer charakteristischen Wellenlänge umfaßt.

18. Verfahren zur Herstellung einer Markierung (1) zur verborgenen Markierung eines Gegenstandes (2), das die folgenden Schritte umfaßt:
(i) Dispergieren einer Probe eines Polymers bei Raumtemperatur in einem Lösungsmittel unter Erhalt einer viskosen Lösung,
(ii) Dispergieren eines Fluoreszenz- oder Phosphoreszenzmaterials in der viskosen Lösung zur Erzeugung einer Fluoreszenz- oder Phosphoreszenzlösung,
(iii) Aufbringen einer im wesentlichen gleichmäßigen Schicht der Fluoreszenz- oder Phosphoreszenzlösung auf ein Substrat und Trocknen der Lösung,
(iv) Entfernen der getrockneten Schicht vom Substrat und Erwärmen der Schicht auf eine Temperatur oberhalb des Glasübergangspunktes des Polymers,
(v) unidirektionales Verstrecken der erwärmten Schicht zur Erzeugung einer Folie, die eine unidirektional ausgerichtete Struktur aufweist,
(vi) Abkühlen der Folie im wesentlichen auf Raumtemperatur und
(vii) Erzeugen von Markierungen aus der Folie zum Aufbringen auf den Original-Gegenstand.

19. Verfahren nach Anspruch 18, das ferner den Schritt des Auflaminierens einer Verzögerungsplatte vor der Herstellung der auf den Original-Gegenstand aufzubringenden Markierungen umfaßt.

20. Verfahren nach Anspruch 18 oder 19, wobei die Markierungen aus der Folie unter Anwendung eines Folienstanzverfahrens hergestellt werden.

21. Verfahren nach Anspruch 20, wobei das Polymer Polyvinylalkohol ist.

22. Verfahren zur verborgenen Markierung eines Gegenstandes (2) und zur Überprüfung seiner Echtheit, das die folgenden Schritte umfaßt:
(i) Aufbringen einer Markierung (1) auf den Gegenstand (2), wobei die Markierung (1) ein Fluoreszenz- oder Phosphoreszenzmaterial enthält, das eine Absorptionsbande und eine unidirektional ausgerichtete Struktur aufweist,
(ii) Beleuchten des Gegenstandes (2) mit einer Quelle (4) für elektromagnetische Strahlung (3a), wobei die Wellenlänge der Strahlung (3a) der Absorptionsbande im Fluoreszenz- oder Phosphoreszenzmaterial entspricht, so daß die Markierung (1) bei Beleuchten eine polarisierte Fluoreszenz- oder Phosphoreszenzstrahlung einer charakteristischen Wellenlänge emittiert, und
(iii) Erfassung der polarisierten Fluoreszenz- oder Phosphoreszenzstrahlung (3b) einer charakteristischen Wellenlänge,
wobei die Erfassung der polarisierten Fluoreszenz- oder Phosphoreszenzstrahlung (3b) einer charakteristischen Wellenlänge ein Anzeichen für die Echtheit des Gegenstandes (2) ist.

## Revendications

1. Système pour marquer de manière cachée un article (2) et contrôler son authenticité, comportant :
une marque (1) comportant un matériau fluorescent ou phosphorescent ayant une bande d'absorption, la marque ayant une structure alignée de manière unidirectionnelle de sorte que, lors d'une illumination à l'aide d'un rayonnement (3a) correspondant à la bande d'absorption du matériau, la marque émet un rayonnement polarisé fluorescent ou phosphorescent (3b) ayant une longueur d'onde caractéristique, la marque (1) étant appliquée à l'article (2),
une source (4) de rayonnement électromagnétique (3a) pour illuminer l'article (2), la longueur d'onde dudit rayonnement (3a) correspondant à la bande d'absorption du matériau, de sorte que, lors de l'illumination, la marque émet un rayonnement polarisé fluorescent ou phosphorescent (3b) ayant une longueur d'onde caractéristique, et
des moyens (5) pour détecter le rayonnement polarisé fluorescent ou phosphorescent (3b) émis par la marque,
de sorte que la détection du rayonnement polarisé fluorescent ou phosphorescent (3b) ayant une longueur d'onde caractéristique fournit une indication de l'authenticité de l'article (2).

2. Système selon la revendication 1, dans lequel la source (4) de rayonnement électromagnétique est une lampe à ultraviolets émettant un rayonnement compris entre 200 nm et 400 nm.

3. Système selon la revendication 1, dans lequel la source (4) de rayonnement électromagnétique est une lampe émettant une lumière visible à courte longueur d'onde comprise entre 380 nm et 550 nm.

4. Système selon la revendication 1, dans lequel les moyens pour détecter le rayonnement polarisé fluorescent ou phosphorescent comportent un échantillon de matériau de polarisation rectiligne (6 ; 10).

5. Système selon la revendication 4, dans lequel l'échantillon de matériau de polarisation rectiligne a un axe de polarisation pratiquement perpendiculaire à la direction du rayonnement fluorescent ou phosphorescent (3b).

6. Système selon l'une quelconque des revendications 1 à 4, dans lequel on fait varier la polarisation du rayonnement fluorescent ou phosphorescent (3b) et la détection de la variation de polarisation fournit une indication de l'authenticité de la marque.

7. Système selon la revendication 4, dans lequel on fait varier l'orientation de l'échantillon de matériau de polarisation rectiligne (6) de sorte que le rayonnement polarisé fluorescent ou phosphorescent est détecté au niveau de deux ou plus de deux orientations de l'échantillon (6).

8. Système selon la revendication 6, et incluant également :
une cellule à cristaux liquides (9) pour transmettre le rayonnement polarisé fluorescent ou phosphorescent (3b), la cellule à cristaux liquides (9) étant capable de faire tourner le plan de polarisation du rayonnement fluorescent ou phosphorescent (3b) transmis à travers la cellule (9), et
des moyens (11) pour appliquer une tension variable à travers la cellule à cristaux liquides (9),
de sorte que, lors de l'application d'une tension variable à travers la cellule (9), on fait varier la polarisation du rayonnement fluorescent ou phosphorescent (3b) passant à travers la cellule (9).

9. Système selon la revendication 8, dans lequel la cellule à cristaux liquides (9) comporte un matériau nématique en hélice.

10. Système selon la revendication 1, et comportant également :
une première plaque retardatrice (7) pour convertir de manière rectiligne un rayonnement fluorescent ou phosphorescent polarisé (3a) en un rayonnement polarisé de manière circulaire ou elliptique,
une seconde plaque retardatrice (8) pour convertir ledit rayonnement polarisé de manière circulaire ou elliptique en un rayonnement polarisé de manière rectiligne, la seconde plaque retardatrice (8) étant montée devant les moyens (5) destinés à détecter le rayonnement fluorescent ou phosphorescent (3b),
de sorte que le rayonnement fluorescent ou phosphorescent polarisé de manière elliptique ou circulaire est transmis entre la première plaque retardatrice (7) et la seconde plaque retardatrice (8).

11. Système selon la revendication 10, dans lequel la marque (1) est stratifiée sur la première plaque retardatrice (7) .

12. Système selon l'une quelconque des revendications 1 à 4, dans lequel la polarisation du rayonnement fluorescent ou phosphorescent est liée à l'intensité du rayonnement transmis par le matériau de polarisation rectiligne (6 ; 10).

13. Système selon la revendication 12, dans lequel le rayonnement polarisé fluorescent ou phosphorescent (3b) peut être observé par l'oeil humain.

14. Système selon la revendication 12, et incluant également un détecteur pour détecter le rayonnement polarisé fluorescent ou phosphorescent (3b).

15. Système selon la revendication 1, dans lequel la marque (1) comporte deux ou plus de deux sections, les différentes sections de la marque étant alignées de manière unidirectionnelle le long de directions différentes.

16. Système selon la revendication 1, dans lequel la marque comporte deux ou plus de deux sections, les différentes sections de la marque comportant des matériaux fluorescents ou phosphorescents différents.

17. Système selon la revendication 1, et comportant également un filtre à bande étroite pour augmenter l'observation ou la détection du rayonnement fluorescent ou phosphorescent (3b) ayant une longueur d'onde caractéristique émis par la marque.

18. Procédé de production d'une marque (1) pour marquer de manière cachée un article (2), comportant les étapes consistant à :
(i) disperser un échantillon de polymère dans un solvant à température ambiante pour former une solution visqueuse,
(ii) disperser un matériau fluorescent ou phosphorescent dans ladite solution visqueuse pour former une solution fluorescente ou phosphorescente,
(iii) étaler une couche pratiquement uniforme de solution fluorescente ou phosphorescente sur un substrat et sécher la solution,
(iv) retirer la couche séchée du substrat et chauffer la couche jusqu'à une température située au-dessus du point de transition vitreuse du polymère,
(v) étirer de manière unidirectionnelle la couche chauffée de manière à produire un film ayant une structure alignée de manière unidirectionnelle,
(vi) refroidir le film jusqu'à pratiquement la température ambiante, et
(vii) produire des marques à appliquer à l'article authentique à partir du film.

19. Procédé selon la revendication 18, et comportant également l'étape consistant à stratifier le film sur une plaque retardatrice avant de produire des marques à appliquer à l'article authentique.

20. Procédé selon la revendication 18 ou 19, dans lequel les marques sont produites à partir du film en utilisant un procédé de poinçonnage de feuille.

21. Procédé selon la revendication 20, dans lequel le polymère est de l'alcool polyvinylique.

22. Procédé pour marquer de manière cachée un article (2) et contrôler son authenticité, comportant les étapes consistant à :
(i) appliquer une marque (1) à l'article (2), ladite marque (1) comportant un matériau fluorescent ou phosphorescent ayant une bande d'absorption et ayant une structure alignée de manière unidirectionnelle,
(ii) illuminer l'article (2) à l'aide d'une source (4) de rayonnement électromagnétique (3a), la longueur d'onde dudit rayonnement (3a) correspondant à la bande d'absorption du matériau fluorescent ou phosphorescent, de sorte que, lors de l'illumination, un rayonnement polarisé fluorescent ou phosphorescent ayant une longueur d'onde caractéristique est émis par la marque (1),
(iii) détecter le rayonnement polarisé fluorescent ou phosphorescent (3b) ayant une longueur d'onde caractéristique,
de sorte que la détection du rayonnement polarisé fluorescent ou phosphorescent (3b) ayant une longueur d'onde caractéristique fournit une indication de l'authenticité de l'article (2).
